# EUROPÄISCHE PATENTSCHRIFT

(11) **EP 2 755 818 B1**
(45) Veröffentlichungstag und Bekanntmachung des Hinweises auf die Patenterteilung: **25.03.2015**
(21) Anmeldenummer: 11788034.4
(22) Anmeldetag: 31.10.2011
(51) Int. Cl.: B32B 5/28, B32B 27/08, B32B 27/40, E04F 15/02

(54) **ELASTISCHER BODENBELAG**
ELASTIC FLOOR COVERING
REVETEMENT DE SOL ELASTIQUE

(43) Veröffentlichungstag der Anmeldung: 23.07.2014
(73) Patentinhaber: WPT GmbH, 32756 Detmold (DE)
(72) Erfinder: WINDMÖLLER, Ulrich, 33758 Schloss Holte-Stukenbrock (DE)
(74) Vertreter: Ter Meer Steinmeister & Partner
(86) Internationale Anmeldenummer: PCT/EP2011/005493
(87) Internationale Veröffentlichungsnummer: WO 2013/064160

(56) Entgegenhaltungen:
- CN-A- 101 793 086
- DE-A1- 10 229 473
- US-A1- 2002 096 255
- "Composite Technical Services Introduce New Class of Polyols", AZoMaterials , 17. Mai 2011 (2011-05-17), XP002679405, Gefunden im Internet: URL:www.sustainableplastics.org/news/compo site-technical-services-introduce-new-clas s-polyols [gefunden am 2012-07-05]

## Beschreibung

Die vorliegende Erfindung betrifft einen elastischen Bodenbelag, mit einem weichen Kern, einer auf dem Kern angeordneten Dekorschicht, einer auf der Dekorschicht liegenden transparenten Nutzschicht und einer unter dem Kern angeordneten Rückenschicht, wobei zumindest der Kern, die Nutzschicht und die Rückenschicht aus Polyurethan bestehen und zwischen dem Kern und der Dekorschicht eine Glasfasermatte einliegt.

Flexible Bodenbeläge aus Kunststoffmaterialien sind schon seit langem bekannt. In der Vergangenheit wurden beispielsweise Bodenbeläge aus PVC oder Linoleum hergestellt. Thermoplastische, also bei Raumtemperatur hinreichend verformbare Bodenbeläge können als Bahnenware vertrieben werden und durch Aufkleben auf den Estrich verlegt werden. Möglich ist auch die Herstellung solcher Bodenbeläge in Form von Paneelen oder Fliesen, die an ihren Seitenkanten mit Verriegelungsprofilen ausgestattet sind, die eine Verbindung mit einem entsprechenden weiteren Paneel bzw. einer weiteren Fliese ermöglichen. Die Flexibilität des Belags erleichtert nicht nur das Verlegen, sondern kann zu positiven Eigenschaften im Gebrauch führen, wie z.B. einer guten Trittschalldämmung.

Der Bodenbelag der hier vorliegenden Art hat einen Schichtaufbau. Er verfügt über einen weichen Kern, eine auf dem Kern angeordnete Dekorschicht, eine darauf liegende Nutzschicht und eine Rückenschicht, die unter dem Kern angeordnet ist. Seit einigen Jahren existieren Bodenbeläge, bei welchen zumindest der Kern, die Nutzschicht und die Rückenschicht aus Polyurethan (PU) hergestellt sind. Dies bringt verschiedenen Vorteile mit sich, wie etwa eine hohe Dimensionsstabilität, d.h. es treten geringe Veränderungen der Abmessungen des Bodenbelags bei Temperaturschwankungen auf. Ferner hat ein solcher Bodenbelag gute elastische Eigenschaften. Verformungen, wie sie durch mechanische Belastungen der Oberfläche bewirkt werden, bilden sich nahezu zu 100% zurück. Von besonderer Bedeutung ist außerdem die hohe Umweltverträglichkeit solcher Belege, die emissionsarm sein müssen und auch im Brandfall keine toxischen Gase freisetzen dürfen.

Das Polyol, das als ein Ausgangsstoff für die Synthese der in diesen Bodenbelägen verwendeten Polyurethane verwendet wird, stammte bisher überwiegend aus petrochemischen Rohstoffen. Das höherwertige aliphatische Polyol wird vorwiegend für das Polyurethan der Nutzschicht eingesetzt, während das PU-Material für den Kern und die Rückenschicht gewöhnlich aus aromatischem Polyol gewonnen wird. Die Verwendung von aliphatischem Polyol führt zu Polyurethanen mit hoher Kratzfestigkeit, Reinigungsfreundlichkeit, UV-Stabilität, Eindruckverhalten, Rückstellverhalten und besseren Eigenschaften im Brandfall.

Während die gesetzlichen Auflagen des Umweltschutzes strenger geworden sind und eine noch höhere Umweltverträglichkeit fordern, verlangt auch der Markt zunehmend nach Produkten mit hervorragender Umweltverträglichkeit im Wohnbereich. Diese Erfordernisse können von den bisherigen Bodenbelägen nicht ausreichend erfüllt werden.

Aufgabe der vorliegenden Erfindung ist es daher, einen flexiblen Bodenbelag mit dem oben beschriebenen Schichtaufbau, der überwiegend oder vollständig aus Polyurethan besteht, bezüglich seiner Eigenschaften weiter zu verbessern, insbesondere bezüglich seiner Umweltverträglichkeit und seines Verhaltens im Brandfall, so dass noch weniger Emissionen freigesetzt werden. Die hervorragenden Gebrauchseigenschaften der bisher bekannten Bodenbeläge aus PU sollen hierbei nicht nur beibehalten, sondern sogar noch verbessert werden, insbesondere hinsichtlich der Dimensionsstabilität, des Eindruckverhaltens bei Belastungen und des Rückstellverhaltens.

Diese Aufgaben werden erfindungsgemäß durch einen Bodenbelag mit den Merkmalen des Anspruchs 1 gelöst.

Der Kern und die Rückenschicht des erfindungsgemäßen Bodenbelags bestehen aus einem Polyurethan, das aus einem aromatischen Polyol synthetisiert wird, welches aus nachwachsenden Rohstoffen gewonnen wird. Es handelt sich also hierbei um sogenannte biogene Polyole. Die hieraus hergestellten Polyurethane weisen bessere Eigenschaften hinsichtlich ihrer Umweltverträglichkeit auf als Polyol petrochemischen Ursprungs. Insbesondere sind sie sehr emissionsarm und entwickeln auch im Brandfall keine toxischen Gase. Es ist somit möglich, einen flexiblen Bodenbelag unter Verwendung von Polyurethan nahezu vollständig aus nachwachsenden Rohstoffen herzustellen und somit auch die Nachfrage nach umweltverträglichen und nachhaltigen Produkten zu befriedigen. Das Polyurethan der Nutzschicht ist aus einem aliphatischen Polyol hergestellt, während das Polyurethan des Kern und der Rückenschicht aus biogenem aromatischem Polyol synthetisiert ist.

Zur weiteren Verbesserung der Dimensionsstabilität liegt zwischen dem Kern und der Dekorschicht zusätzlich eine Glasfasermatte ein, die das Eindruckverhalten und das Rückstellverhalten weiter verbessert und eine Ausdehnung und eine Schrumpfung des Belags bei einer Temperaturveränderung unterbindet. Die Dekorschicht besteht bei dem erfindungsgemäßen Bodenbelag aus einem Zellstoffpapier, das mit Polyurethan imprägniert ist. Auch dieses Polyurethan lässt sich aus einem biogenen Polyol synthetisieren.

Gemäß einer besonderen Ausführungsform der vorliegenden Erfindung handelt es sich bei den nachwachsenden Rohstoffen um Pflanzenöl, insbesondere um Rizinusöl, Rapsöl oder Palmenöl.

Gemäß einer weiter bevorzugten Ausführungsform ist die Rückenschicht an ihrer Unterseite mit einer Oberflächenstruktur versehen. Diese gewährleistet eine gute Verbindung zu einem Klebstoff, der zum Verkleben des Bodenbelags auf einem Untergrund wie z.B. Estrich verwendet wird.

Gemäß einer weiteren bevorzugten Ausführungsform der Erfindung sind der Kern und die Rückenschicht einteilig ausgebildet und bestehen aus identischem Material. Die Rückenschicht stellt somit lediglich die Rückseite des Kerns dar.

Vorzugsweise ist die Rückenschicht aus einer Polyolformulierung hergestellt, die affine Eigenschaften gegenüber herkömmlichen Dispersionsklebern hat, wie sie gewöhnlich für Bodenbeläge eingesetzt werden.

Weiter vorzugsweise weist die Nutzschicht eine Dicke zwischen 0,1 mm und 0,5 mm auf, die Dekorschicht weist eine Dicke von etwa 0,2 mm auf, und die Glasfasermatte weist eine Dicke zwischen 0,2 mm und 0,5 mm auf.

Gemäß einer weiteren bevorzugten Ausführungsform weist das Zellstoffpapier der Dekorschicht ein Flächengewicht zwischen 35 und 80 g/m² auf.

Gemäß einer Ausführungsform der vorliegenden Erfindung ist der Bodenbelag als aufrollbare Bahnenware hergestellt. Es ist somit möglich, den erfindungsgemäßen Bodenbelag als Bahnenware in Rollen auszuliefern und vor Ort bei der Verlegung entsprechend zuzuschneiden und aufzukleben. Diese Bahnenware kann beispielsweise eine Dicke von ca. 1 - 3 mm aufweisen.

Gemäß einer alternativen Ausführungsform kann der Bodenbelag zu einer Platte zugeschnitten sein, die an seitlichen Kanten mit Verriegelungsprofilen zur Verbindung mit weiteren Platten versehen ist. Der Bodenbelag wird also in Form von Bodenpaneelen ausgeliefert, die mit Profilen ausgestattet sein können, die sich miteinander verbinden lassen. Diese Platte kann beispielsweise eine Dicke zwischen etwa 3 mm und 8 mm aufweisen.

Die vorliegende Erfindung betrifft weiter vorzugsweise ein Bodenelement zur Verlegung auf einem Fußboden, wie etwa ein Bodenpaneel oder eine Bodenfliese, die eine Trägerplatte umfasst, die mit dem erfindungsgemäßen Bodenbelag kaschiert ist. Der erfindungsgemäße elastische Bodenbelag ist also unterseitig durch die Trägerplatte verstärkt. Die Trägerplatte kann aus einem relativ preiswerten Material wie etwa einem Holzwerkstoff hergestellt sein. Der Bodenbelag, der auf die Trägerplatte kaschiert ist, kann eine Dicke von ca. 1 mm aufweisen.

Die Trägerplatte dieses Bodenelements ist vorzugsweise an seitlichen Kanten mit Verriegelungsprofilen zur Verbindung mit weiteren Platten versehen. Die Verlegung kann daher wie bei herkömmlichen Bodenpaneelen durch Verbindung der Verriegelungsprofile erfolgen.

Ein Verfahren zur Herstellung des erfindungsgemäßen Bodenbelags ist gekennzeichnet durch einen ersten Prozess zur Bildung eines oberen Schichtverbunds, der die Nutzschicht, die Dekorschicht und die Glasfasermatte umfasst, und durch einen zweiten Prozess zur Bildung des Kerns in der Rückenschicht, sowie durch Zusammenfügen des oberen Schichtverbunds mit dem Kern. Der erste Prozess umfasst die folgenden Schritte:
a) Auftragen einer Schicht aus Polyurethan aus einem aliphatischen Polyol auf ein erstes Trägerband zur Bildung der Nutzschicht,
b) Auftragen einer Zellstoffpapierbahn zur Bildung der Dekorschicht auf die Nutzschicht,
c) Auftragen einer Glasfasermattenbahn auf die Zellstoffpapierbahn,
d) Imprägnieren der Zellstoffpapierbahn und der Glasfasermattenbahn mit Polyurethan.

Der zweite Prozess umfasst den Schritt des Auftragens einer Schicht aus Polyurethan aus einem biogenen aromatischen Polyol auf ein oberflächenstrukturiertes zweites Trägerband zur Bildung der Rückenschicht und des Kerns.

Vorzugsweise umfasst der erste Prozess nach dem Schritt d) die Schritte des Entfernen des ersten Trägerbands, und des Temperierens des oberen Schichtverbunds.

Gemäß einer weiteren Ausführungsform dieses erfindungsgemäßen Verfahrens umfasst der zweite Prozess nach dem Schritt der Bildung der Rückenschicht und des Kerns den Schritt des Auftragens eines Kaschierklebers auf den Kern. Auf diese Weise wird der Kern für das Zusammenfügen mit dem oberen Schichtverbund vorbereitet.

Weiter vorzugsweise wird nach dem Schritt des Auftragens des Kaschierklebers auf den Kern der obere Schichtverbund auf den Kern aufgeklebt.

Im folgenden wird ein bevorzugtes Ausführungsbeispiel der Erfindung anhand der Zeichnung näher erläutert.
- Fig. 1: zeigt einen schematischen Schnitt durch den Schichtaufbau einer Ausführungsform des erfindungsgemäßen elastischen Bodenbelags, und
- Fig. 2: ist eine schematische Darstellung eines Verfahrensablaufs zur Herstellung des erfindungsgemäßen Bodenbelags.

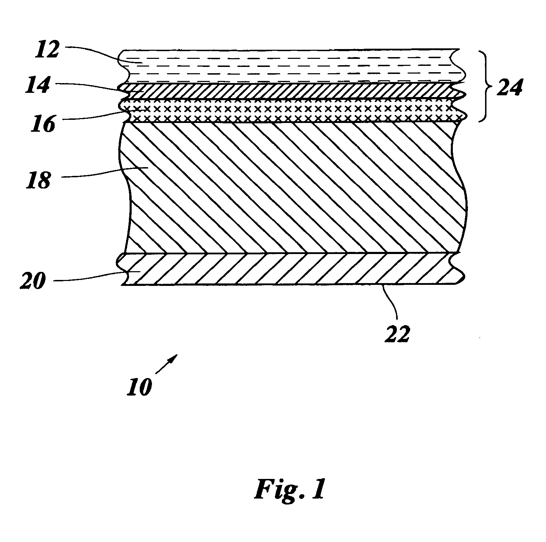

Im Schnitt ist in Fig. 1 ein Bodenbelag 10 dargestellt, der einen Schichtaufbau aufweist. Dieser umfasst (von oben nach unten) eine transparente Nutzschicht 12, die die Oberseite des Bodenbelags 10 bildet, eine darunter liegende Dekorschicht 14, die ein Dekor trägt, eine Glasfasermatte 16 unter der Dekorschicht 14, einen weichen Kern 18 und eine Rückenschicht 20, die den Schichtaufbau des Bodenbelags 10 zum Untergrund hin abschließt. Einzelheiten dieses Schichtaufbaus sollen im folgenden näher beschrieben werden.

Die Nutzschicht 12 besteht vollständig aus einem Polyurethan (PU), das aus einem hochwertigen aliphatischen Polyol synthetisiert worden ist. Dieses aliphatische Polyol ist kein biogenes Polyol. Ferner weist die so aufgebaute Nutzschicht 12 eine hohe Kratzfestigkeit, Reinigungsfreundlichkeit, UV-Stabilität, ein gutes Eindruckverhalten und Rückstellverhalten und niedrige Emissionen toxischer Gase im Brandfall auf. Unter dem Eindruckverhalten ist das Verhalten des Materials bei einer mechanischen Belastung zu verstehen. Die Oberfläche des Bodenbelags 10 ist sehr widerstandsfähig gegenüber solchen Einwirkungen. Falls sich Eindrücke bilden, so werden diese nahezu vollständig wieder zurückgebildet, wenn die mechanische Last entfernt wird.

Die Nutzschicht 12 weist bei der vorliegenden Ausführungsform eine Dicke zwischen 0,1 und 0,5 mm auf.

Der unter Nutzschicht 12 befindliche Dekorfilm 14 besteht aus einem Dekorpapier, also einer Zellstoffschicht, die mit Polyurethan getränkt ist. Dieses Polyurethan kann ebenfalls aus einem biogenen Polyol synthetisiert worden sein, das also aus einem nachwachsenden Rohstoff gewonnen wird. Das Dekorpapier kann ein Flächengewicht zwischen 35 und 80 g/m² haben und ist auf seiner Oberseite mit dem Dekor bedruckt.

Zur Erhöhung der Dimensionsstabilität und zur weiteren Verbesserung des Eindruck- und Rückstellverhaltens des Bodenbelags 10 umfasst der Schichtaufbau ferner eine Glasfasermatte 16, die zwischen der Dekorschicht 14 und dem darunter liegenden Kern 18 angeordnet ist. Diese Glasfasermatte ist ebenfalls mit Polyurethan getränkt, das aus einem biogenen Polyol hergestellt wird. Sie hat eine Dicke zwischen 0,2 mm und 0,5 mm.

Sowohl der Kern 18 als auch die Rückenschicht 20 bestehen jeweils aus einem Polyurethan, das aus einem aromatischen Polyol aus nachwachsenden Rohstoffen gewonnen wird. Aromatisches Polyol ist zwar weniger hochwertig als aliphatisches Polyol, doch da der Kern 18 und die Rückenschicht 20 nicht an der Oberfläche des Bodenbelags 10 frei liegen, kann hier auch die Verwendung von Werkstoffen in Kauf genommen werden, die weniger hochwertig sind. Dennoch hat der Kern 18 sehr gute Eigenschaften hinsichtlich der Umweltverträglichkeit, ist sehr emissionsarm und setzt im Brandfall keine toxischen Gase frei. Der Kern 18 kann zusätzliche Füllstoffe enthalten.

Die Rückenschicht 20 kann auf ihrer unterseitigen Oberfläche 22 mit einer Struktur versehen sein, die das Anhaften mit einem Klebstoff begünstigt. Auf diese Weise kann der Bodenbelag 10 gut mit einem Untergrund verklebt werden. Der hier dargestellte Bodenbelag 10 kann somit unmittelbar auf einen Estrich aufgeklebt werden.

In alternativen Ausführungsformen ist es denkbar, den Bodenbelag 10 nicht unmittelbar auf dem Untergrund, sondern auf einer Trägerplatte aufzubringen. Es entsteht hierdurch ein Bodenpaneel oder eine Bodenfliese, die mit dem erfindungsgemäßen Bodenbelag kaschiert ist und wie herkömmliche Bodenpaneele verlegt werden kann, beispielsweise mit Hilfe von Verriegelungsprofilen, die an den Seitenkanten der Paneele angebracht sind.

In einer weiteren Ausführungsform ist es möglich, den Bodenbelag 10 selbst als Bodenplatte auszubilden, die eine gewisse Flexibilität und Elastizität aufweist. Auch diese Bodenplatte kann mit seitlichen Verriegelungsprofilen versehen sein.

Weitere spezifische Ausführungsformen werden im folgenden noch näher genannt.

### AUSFÜHRUNGSFORM 1

Bei dieser Variante handelt es sich um ein Bodenelement zur Verlegung auf einem Fußboden, umfassend eine unterseitige Trägerplatte aus einem Holzwerkstoff wie Span, MDF oder HDF. Möglich ist auch, die Trägerplatte aus Kunststoff auszubilden. Auf ihrer Oberseite ist die Trägerplatte mit dem erfindungsgemäßen Bodenbelag 10 kaschiert, wie er in der Figur dargestellt und weiter oben beschrieben ist. Die Rückenschicht 20 dieses Bodenbelags 10 ist auf die Trägerplatte aufgeklebt.

Der Bodenbelag 10 auf der Oberseite der Trägerplatte hat eine Stärke von ca. 1 mm.

### AUSFÜHRUNGSFORM 2

Hierbei handelt es sich um den Bodenbelag 10 als Bahnenware, die im aufgerollten Zustand angeliefert werden kann und mit dem Untergrund verklebt wird. Der Bodenbelag 10 hat in dieser Variante eine Gesamtstärke von 1,8 bis 3 mm.

### AUSFÜHRUNGSFORM 3

Hierbei handelt es sich um eine elastische Bodenplatte, die vollständig durch den Bodenbelag 10 selbst gebildet wird und deren Oberseite durch die Nutzschicht 12 gebildet wird, während die Unterseite 22 durch die Rückenschicht 20 gebildet wird. Diese Platten sind an ihren Seitenkanten mit Verriegelungsprofilen wie etwa Profilen zur klebstofffreien Verlegung versehen. Die Platten haben eine Gesamtstärke von 3 bis 8 mm und können eine Breite von ca. 2 m aufweisen und anschließend in unterschiedliche Längen gekappt und in unterschiedliche Breiten aufgetrennt werden.

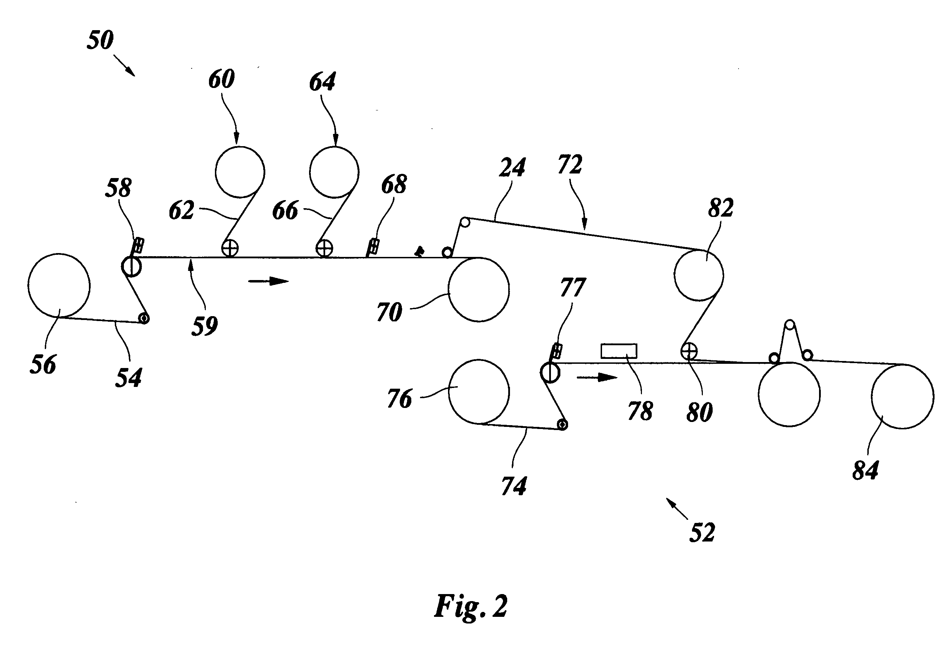

Fig. 2 zeigt schematisch ein Verfahrensablauf zur Herstellung des Bodenbelags 10, beispielsweise als Bahnenware.

Das Verfahren ist in zwei verschiedene Prozesse aufgeteilt, die gleichzeitig stattfinden können. Im ersten Prozess werden die Nutzschicht 12 und die Dekorschicht 14 hergestellt und mit der Glasfasermatte 16 verbunden, so dass ein Schichtverbund entsteht, der in Fig. 1 mit der Bezugsziffer 24 bezeichnet ist. In dem zweiten Prozess werden der Kern 18 und die Rückenschicht 20 hergestellt. Anschließend werden die in den beiden Prozessen hergestellten Bestandteile des Bodenbelags 10 zu einer Einheit verbunden, beispielsweise durch Verkleben, so dass der obere Schichtverbund 24 auf den Kern 18 aufgeklebt wird.

In Fig. 2 ist der erste Prozess 50 schematisch im oberen Bereich der Zeichnung dargestellt, während der zweite Prozess 52 im unteren Figurenteil dargestellt ist. Im ersten Prozess 50 wird zunächst ein erstes Trägerband 54 von einer Rolle 56 abgewickelt und einer Station 58 zum Auftragen einer Polyurethanschicht auf das Trägerband 54 zugeführt. Das Polyurethan dieser Schicht stammt aus einem hochwertigen aliphatischen Polyol. Mittels einer Rakel wird in dieser Station 58 die Polyurethanschicht in der gewünschten Dicke auf das Trägerband 54 aufgetragen. Die so entstehende Polyurethanschicht bildet die Nutzschicht 12 aus Fig. 1.

Das Trägerband 54 mit der Nutzschicht 12 wird anschließend in der nachfolgenden Station 60 mit einer Zellstoffpapierbahn 62 kaschiert. Vor dem Erreichen der Station 60 durchläuft die Nutzschicht 12 eine Heizstrecke 59. Es ist anzumerken, dass sich in diesem Prozess die Nutzschicht 12 unten befindet und mit der Seite, die in der Gebrauchsposition gemäß Fig. 2 die Nutzseite bildet, auf dem Trägerband 54 aufliegt. Die Schichtung im ersten Prozess erfolgt somit gemäß der Orientierung in Fig. 1 von oben nach unten, d.h. es wird zunächst die Nutzschicht 12 gebildet und anschließend die Dekorschicht 14 und die Glasfasermatte 16 aufgetragen.

In der nachfolgenden Station 64 wird eine Glasfasermattenbahn 66 von einer Rolle abgewickelt und auf die Zellstoffpapierbahn 62 aufgelegt, so dass auf das Trägerband 54 nunmehr die Nutzschicht 12, die Zellstoffpapierbahn 62 zur Bildung der Dekorschicht 14 und die Glasfasermattenbahn 66 geschichtet sind. Dieses Schichtgebilde wird weiter zu einer Station 68 transportiert, in welcher die Zellstoffpapierbahn 62 und die Glasfasermattenbahn 66 mit Polyurethan getränkt werden. Dies geschieht wiederum durch eine Rakel mit einer Gummilippe, die das Polyurethan in die Glasfasermattenbahn und die Zellstoffpapierbahn einbringt.

Der Schichtverbund 24, der so entstanden ist, wird anschließend vom Trägerband 54 getrennt, das auf eine Rolle 70 aufgewickelt wird. Nach der Delamination durchläuft der Schichtverbund 24 eine Temperierstrecke 72, auf der er auf eine vorbestimmte Temperatur gebracht wird.

Im zweiten Prozess 52 wird zunächst ein zweites Trägerband 74 von einer Rolle 76 abgewickelt. Dieses Trägerband 74 ist auf seiner Oberfläche strukturiert. Es durchläuft eine Station 77, an der eine Schicht aus Polyurethan auf das oberflächenstrukturierte Trägerband 74 aufgetragen wird, das aus einem biogenen aliphatischen Polyol stammt, also aus einem Polyol aus nachwachsenden Rohstoffen. Die in der Station 77 aufgetragene Schicht bildet den Kern 18 und die Rückenschicht 20. Im vorliegenden Fall wird die Rückenschicht 20 lediglich durch die strukturierte Unterseite des Kerns 18 gebildet, d.h. Kern 18 und Rückenschicht 20 bilden eine körperliche Einheit.

Das Trägerband 74 trägt den Kern 18 mit der Rückenschicht 20 weiter in eine Station 78, in der ein Kaschierkleber auf die Oberseite des Kerns 18 aufgetragen wird.

Stromabwärts der Station 78 ist eine Kaschierwelle 80 angeordnet, durch welche der Schichtverbund 24 aus dem ersten Prozess 50 auf die mit dem Klebstoff versehene Oberseite des Kerns 18 aufgetragen wird. Es wird angemerkt, dass der Schichtverbund 24 zwischenzeitlich aufgerollt und für die hier beschriebenen Kaschiervorgang wieder abgewickelt werden kann, was in Fig. 2 nicht dargestellt ist. Es ist allerdings auch möglich, den Schichtverbund 24 nach Durchlaufen der Kühlstrecke 72 ohne weiteres über Umlenkrollen oder dergleichen der Kaschierwelle 80 zuzuführen. Schematisch ist eine solche Umlenkrolle 82 in Fig. 2 dargestellt. Das Umlenken muss im tatsächlichen Prozess allerdings ggf. auch das Drehen des Schichtverbunds 24 auf die richtige Seite beinhalten, was hier ebenfalls nicht näher gezeigt ist.

Stromabwärts der Kaschierwelle 80 wird das strukturierte Trägerband 74 wieder aufgewickelt und von dem fertigen Bodenbelag 10 getrennt. Dieser wird anschließend als Bahnenware auf eine Rolle 84 aufgewickelt.

## Patentansprüche

1. Elastischer Bodenbelag (10), mit einem weichen Kern (18), einer auf dem Kern (18) angeordneten Dekorschicht (14), einer auf der Dekorschicht (14) liegenden Nutzschicht (12) und einer unter dem Kern (18) angeordneten Rückenschicht (20), wobei zumindest der Kern (18), die Nutzschicht (12) und die Rückenschicht (20) aus Polyurethan bestehen und zwischen dem Kern (18) und der Dekorschicht (14) eine Glasfasermatte (16) einliegt, **dadurch gekennzeichnet**,
- dass die Dekorschicht (14) aus einem Zellstoffpapier besteht, das mit Polyurethan imprägniert ist,
- dass die Nutzschicht (12) aus einem Polyurethan besteht, das aus einem aliphatischen Polyol gewonnen wird,
- während der Kern (18) und die Rückenschicht (20) jeweils aus einem Polyurethan bestehen, das aus einem aromatischen Polyol aus nachwachsenden Rohstoffen gewonnen wird.

2. Bodenbelag gemäß Anspruch 1, dadurch **gekennzeichnet,** dass es sich bei den nachwachsenden Rohstoffen um Pflanzenöl handelt, insbesondere um Rizinusöl, Rapsöl oder Palmenöl.

3. Bodenbelag gemäß Anspruch 1 oder 2, dadurch **gekennzeichnet,** dass die Rückenschicht (20) an ihrer Unterseite (22) mit einer Oberflächenstruktur versehen ist.

4. Bodenbelag gemäß einem der vorhergehenden Ansprüche, dadurch gekenn**zeichnet,** dass der Kern (18) und die Rückenschicht (20) einteilig ausgebildet sind und aus identischem Material bestehen.

5. Bodenbelag gemäß einem der vorhergehenden Ansprüche, dadurch gekenn**zeichnet,** dass die Rückenschicht (20) aus Polyolformulierung hergestellt wird, die affine Eigenschaften gegenüber herkömmlichen Dispersionsklebern hat.

6. Bodenbelag gemäß einem der vorhergehenden Ansprüche, dadurch gekenn**zeichnet,** dass die Nutzschicht (12) eine Dicke zwischen 0,1 mm und 0,5 mm aufweist, die Dekorschicht (14) eine Dicke von etwa 0,2 mm aufweist, und die Glasfasermatte (16) eine Dicke zwischen 0,2 mm und 0,5 mm aufweist.

7. Bodenbelag gemäß einem der vorhergehenden Ansprüche, dadurch gekenn**zeichnet,** dass das Zellstoffpapier der Dekorschicht (14) ein Flächengewicht zwischen 35 und 80 g/m² aufweist.

8. Bodenbelag gemäß einem der vorhergehenden Ansprüche, dadurch gekenn**zeichnet,** dass der Bodenbelag als aufrollbare Bahnenware hergestellt wird.

9. Bodenbelag gemäß einem der Ansprüche 1 bis 7, **dadurch gekennzeichnet, dass** der Bodenbelag (10) zu einer Platte zugeschnitten ist, die an seitlichen Kanten mit Verriegelungsprofilen zur Verbindung mit weiteren Platten versehen ist.

10. Bodenelement zur Verlegung auf einem Fußboden, wie etwa ein Bodenpaneel oder eine Bodenfliese, umfassend eine Trägerplatte, die mit einem Bodenbelag (10) gemäß einem der vorhergehenden Ansprüche kaschiert ist.

11. Bodenelement gemäß Anspruch 10, dadurch **gekennzeichnet,** dass die Trägerplatte an seitlichen Kanten mit Verriegelungsprofilen zur Verbindung mit weiteren Platten versehen ist.

12. Verfahren zur Herstellung eines Bodenbelags gemäß einem der Ansprüche 1 bis 9, **gekennzeichnet** durch einen ersten Prozess (50) zur Bildung eines oberen Schichtverbunds (24), der die Nutzschicht (12), die Dekorschicht (14) und die Glasfasermatte (16) umfasst, und durch einen zweiten Prozess (52) zur Bildung des Kerns (18) und der Rückenschicht (20), sowie durch Zusammenfügen des oberen Schichtverbunds (24) mit dem Kern (118), wobei der erste Prozess (50) die folgenden Schritte umfasst:
a) Auftragen einer Schicht aus Polyurethan aus einem aliphatischen Polyol auf ein erstes Trägerband (54) zur Bildung der Nutzschicht (12),
b) Auftragen einer Zellstoffpapierbahn (62) zur Bildung der Dekorschicht (14) auf die Nutzschicht (12),
c) Auftragen einer Glasfasermattenbahn (66) auf die Zellstoffpapierbahn (62),
d) Imprägnieren der Zellstoffpapierbahn (62) und der Glasfasermattenbahn (66) mit Polyurethan,
und der zweite Prozess (52) den folgenden Schritt umfasst:
e) Auftragen einer Schicht aus Polyurethan aus einem biogenen aromatischen Polyol auf ein oberflächenstrukturiertes zweites Trägerband (74) zur Bildung der Rückenschicht (12) und des Kerns (18).

13. Verfahren gemäß Anspruch 12, dadurch **gekennzeichnet,** dass der erste Prozess (50) nach dem Schritt d) die folgenden weiteren Schritte umfasst:
f) Entfernen des ersten Trägerbands (54), und
g) Temperieren des oberen Schichtverbunds (24).

14. Verfahren gemäß Anspruch 12 oder 13, dadurch **gekennzeichnet,** dass der zweite Prozess (52) nach dem Schritt e) den folgenden weiteren Schritt umfasst:
h) Auftragen eines Kaschierklebers auf den Kern (18).

15. Verfahren gemäß Anspruch 14, dadurch **gekennzeichnet,** dass nach Schritt h) der obere Schichtverbund (24) auf den Kern (18) aufgeklebt wird.

## Claims

1. Elastic floor covering (10), comprising a soft core (18), a decorative layer (14) disposed on the core, a wear layer (12) disposed on the decorative layer (14) and a backing layer (20) disposed below the core (18), wherein at least the core (18), the wear layer (12) and the backing layer (20) are made of polyurethane, and a glass fibre mat (16) is arranged between the core (18) and the decorative layer (14), **characterized in that**
- the decorative layer (14) consists of cellulose paper impregnated with polyurethane,
- that the wear layer (12) is made of polyurethane that is obtained from an aliphatic polyol,
- and the core (18) and the backing layer (20) respectively consists of a polyurethane that is obtained from an aromatic polyol from renewable raw materials.

2. Floor covering according to claim 1, **characterized in that** the renewable resources are vegetable oil, in particular castor oil, rapeseed oil or palm oil.

3. Floor covering according to claim 1 or 2, **characterized in that** the backing layer (20) is provided with a surface structure on its bottom side.

4. Floor covering according to one of the preceding claims, **characterized in that** the core (18) and the backing layer (20) are integrally formed and consist of identical material.

5. Floor covering according to one of the preceding claims, **characterized in that** the backing layer (20) is made from an polyol formulation with affine properties with respect to conventional dispersion adhesives.

6. Floor covering according to one of the preceding claims, **characterized in that** the wear layer (12) has a thickness between 0.1 mm und 0.5 mm, the decorative layer (14) has a thickness of about 0.2 mm, and the glass fibre mat (16) has a thickness between 0.2 mm and 0.5 mm.

7. Floor covering according to one of the preceding claims, **characterized in that** the cellulose paper of the decorative layer (14) has an area weight between 35 and 80 g/m².

8. Floor covering according to one of the preceding claims, **characterized in that** the floor covering is produced as rolled up web material.

9. Floor covering according to one claims 1 to 7, **characterized in that** the floor covering (10) is cut into a plate provided at lateral edges with interlocking profiles to be connected to further plates.

10. Floor element for laying on a floor, such as a floor panel or floor tile, comprising a carrier plate which is covered with a floor covering (10) according to one of the preceding claims.

11. Floor element according to claim 10, **characterized in that** the carrier plate is provided at its lateral edges with locking profiles for connection to other plates.

12. Method for producing a floor covering according to one of claims 1 to 9, **characterized by** a first process (50) to form an upper layer composite (24) comprising the wear layer (12), the decorative layer (14) and the glass fibre mat (16), and by a second process (52) to form the core (18) and the backing layer (20), as well as by joining the upper layer composite (24) with the core (118), wherein the first process (50) comprises the following steps:
a) applying a layer of polyurethane from an aliphatic polyol to a first carrier web (54) to form the wear layer (12),
b) applying a cellulose paper web (62) for forming the decorative layer (14) on the wear layer (12),
c) applying a glass fibre mat web (66) onto the cellulose paper web (62),
d) impregnating the cellulose paper web (62) and the glass fibre mat web (66) with
polyurethane,
and the second process (52) comprises the following step:
e) applying a layer of polyurethane from a biogenic aromatic polyol to a surface structured second carrier web (74) for forming the backing layer (12) and the core (18).

13. Method according to claim 12, **characterized in that** the first process (50) comprises the following further steps after step d):
f) removing the first carrier web (54), and
g) controlling the temperature of the upper layer composite (24).

14. Method according to claim 12 or 13, **characterized in that** the second process (52) comprises the following step after step e):
h) applying a laminating adhesive on the core (18).

15. Method according to claim 14, **characterized in that** after step h), the upper composite layer (24) is glued onto the core (18).

## Revendications

1. Revêtement de sol élastique (10), comportant une âme souple (18), une couche décorative (14) disposée sur l'âme (18), une couche d'usure (12) disposée sur la couche décorative (14) et une couche d'envers (20) disposée en-dessous de l'âme (18), au moins l'âme (18), la couche d'usure (12) et la couche d'envers (20) étant constitués de polyuréthanne, et un matelas en fibres de verre (16) étant inséré entre l'âme (18) et la couche décorative (14), **caractérisé en ce que**
- la couche décorative (14) est constituée d'un papier cellulosique, imprégné de polyuréthanne,
- la couche d'usure (12) est constituée d'un polyuréthanne qui a été obtenu à partir d'un polyol aliphatique,
- tandis que l'âme (18) et la couche d'envers (20) sont chacune constituées d'un polyuréthanne qui a été obtenu à partir d'un polyol aromatique, provenant de matières premières renouvelables.

2. Revêtement de sol selon la revendication 1, **caractérisé en ce que**, pour ce qui concerne les matières premières renouvelables, il s'agit d'une huile végétale, en particulier d'huile de ricin, d'huile de colza ou d'huile de palme.

3. Revêtement de sol selon la revendication 1 ou 2, **caractérisé en ce que** la couche d'envers (20) est, sur sa face inférieure (22), pourvue d'une structure superficielle.

4. Revêtement de sol selon l'une des revendications précédentes, **caractérisé en ce que** l'âme (18) et la couche d'envers (20) sont formés d'une seule pièce et sont constitués d'un matériau identique.

5. Revêtement de sol selon l'une des revendications précédentes, **caractérisé en ce que** la couche d'envers (20) est fabriquée à partir d'une formulation de polyol qui a des propriétés affines vis-à-vis d'adhésifs classiques en dispersion.

6. Revêtement de sol selon l'une des revendications précédentes, **caractérisé en ce que** la couche d'usure (12) présente une épaisseur comprise entre 0,1 mm et 0,5 mm, la couche décorative (14) présente une épaisseur d'environ 0,2 mm, et le matelas de fibres de verre (16) présente une épaisseur comprise entre 0,2 mm et 0,5 mm.

7. Revêtement de sol selon l'une des revendications précédentes, **caractérisé en ce que** le papier cellulosique de la couche décorative (14) présente un grammage compris entre 35 et 80 g/m².

8. Revêtement de sol selon l'une des revendications précédentes, **caractérisé en ce que** le revêtement de sol est fabriqué sous forme d'une bande enroulable.

9. Revêtement de sol selon l'une des revendications 1 à 7, **caractérisé en ce que** le revêtement de sol (10) est découpé pour donner une plaque qui sur ses arêtes latérales est pourvue de profils de verrouillage pour assemblage à d'autres plaques.

10. Elément de sol pour pose sur un plancher, tel qu'un panneau de plancher ou un carreau de plancher, comprenant une plaque support qui est stratifiée avec un revêtement de sol (10) selon l'une des revendications précédentes.

11. Elément de sol selon la revendication 10, **caractérisé en ce que** la plaque support est sur ses arêtes latérales pourvue de profils de verrouillage pour assemblage à d'autres plaques.

12. Procédé de fabrication d'un revêtement de sol selon l'une des revendications 1 à 9, **caractérisé par** une première opération (50) de formation d'un composé de stratifié supérieur (24), qui comprend la couche d'usure (12), la couche décorative (14) et le matelas de fibres de verre (16), et par une deuxième opération (52) de formation de l'âme (18) et de la couche d'envers (20), et aussi par assemblage du composite stratifié supérieur (24) à l'âme (18), la première opération (50) comprenant les étapes suivantes :
a) application d'une première couche de polyuréthanne, obtenu à partir d'un polyol aliphatique, sur une première bande support (54) pour la formation de la couche d'usure (12),
b) application d'une bande (62) de papier cellulosique pour la formation de la couche décorative (14) sur la couche d'usure (12),
c) application d'une bande de matelas de fibres de verre (66) sur la bande (62) de papier cellulosique,
d) imprégnation, avec du polyuréthanne, de la bande (62) de papier cellulosique et de la bande de matelas de fibres de verre (66),
et la deuxième opération (52) comprend les étapes suivantes :
e) application d'une couche d'uréthanne obtenue à partir d'un polyol aromatique biogène sur une deuxième bande support (74) à surface structurée, pour la formation de la couche d'envers (12) et de l'âme (18).

13. Procédé selon la revendication 12, **caractérisé en ce que** la première opération (50) comprend après l'étape d) les étapes supplémentaires suivantes :
f) élimination de la première bande support (54), et
g) équilibrage de la température du composé de stratifié supérieur (24).

14. Procédé selon la revendication 12 ou 13, **caractérisé en ce que** la deuxième opération (52) comprend après l'étape e) l'étape supplémentaire suivante :
h) application d'un adhésif de stratification sur l'âme (18).

15. Procédé selon la revendication 14, **caractérisé en ce que**, après l'étape h), le composite stratifié supérieur (24) est collé sur l'âme (18).
